# EUROPEAN PATENT SPECIFICATION

(11) **EP 2 977 792 B1**
(45) Date of publication and mention of the grant of the patent: **13.06.2018**
(21) Application number: 15177549.1
(22) Date of filing: 20.07.2015
(51) Int. Cl.: G01T 1/29

(54) **A CT DETECTOR**
CT-DETEKTOR
DÉTECTEUR DE TOMOGRAPHIE PAR ORDINATEUR

(30) Priority: 25.07.2014 CN 201410360281
(43) Date of publication of application: 27.01.2016
(73) Proprietor: GE Medical Systems Global Technology Company, LLC, Waukesha, Wisconsin 53188-1696 (US)
(72) Inventor: SUN, Yunfeng, 100176 Beijing (CN); LI, Qinglei, 100176 Beijing (CN); NIE, Guanying, 100176 Beijing (CN); CUI, Deqi, 100176 Beijing (CN)
(74) Representative: Bedford, Grant Richard

(56) References cited:
- CN-A- 103 135 121
- US-B1- 6 304 626

## Description

The present invention relates generally to the technical field of a detector, and more particularly to a CT detector.

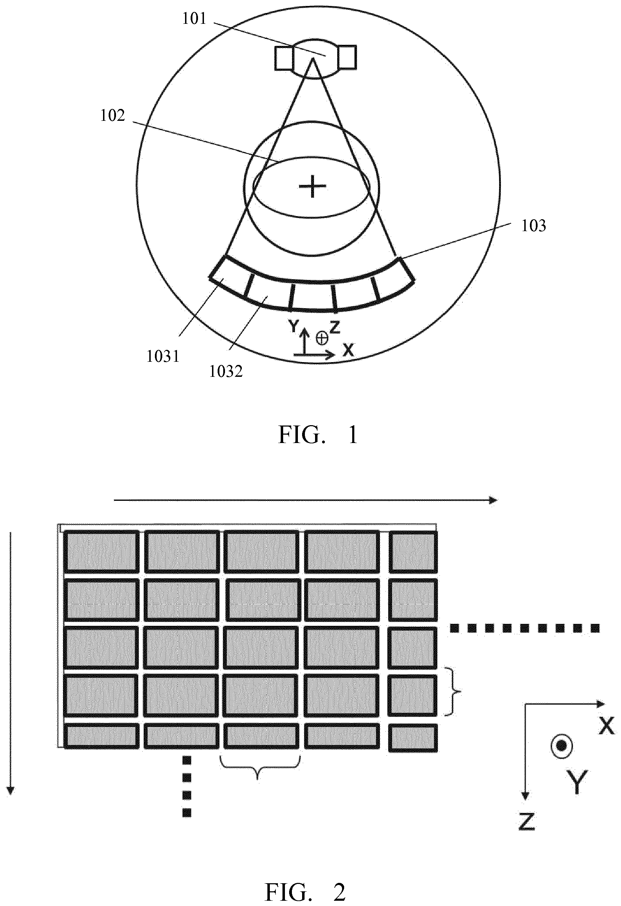

As shown in Fig. 1, in a computerized tomography (CT) apparatus, a detector 103 can be used for receiving X-rays emitted by a X-ray tube 101 (a bulb tube) and penetrating through a to-be-detected object 102 and for converting the X-rays to electric signals. Usually, the detector 103 may include multiple detector modules 1031, 1032 and the like.

A CT detector in the prior art includes more detector modules, each of which has fewer channels (i.e., pixels) in the X direction (i.e., a direction of an arc in which the detector rotates). In this way, these detector modules can be set in the shape of the arc or approximately in the shape of the arc, so as to have equal pixel dimensions. Moreover, with respect to the focus of the bulb tube, equal pixel dimensions have equal flare angles.

For cost reduction, the number of detector modules included in another CT detector in the prior art is less than that of the arc detectors as described above, and the number of channels within each detector module is significantly more that that of channels of each detector module in the arc detectors. In other words, each detector module has a wider surface. Therefore, multiple such detector modules are shaped to be a polyline in which multiple straight segments connect with each other in the X direction. In such a detector, with respect to the focus of the bulb tube, the pixels with equal dimensions do not correspond to equal flare angles.

As shown in Fig. 2, no matter which type as described above a CT detector is, scintillators (blocks in Fig. 2) for constituting pixels in the detector modules thereof may be arranged in the X direction and in the Z direction, in which the adjacent scintillators have gaps there between that are often filled with a material for connecting the adjacent pixels. After X-rays are often emitted into the gaps, the performance of the material will be affected. Furthermore, with respect to the CT detector in which the straight segments connect with each other as described above, different widths can be generated on the surface of the detector due to equal flare angles of irradiation, the result may be that the X-rays are shifted to the adjacent pixels, crosstalk is produced, causing the finally generated image to have artifacts. Therefore, there is a need to provide a CT detector, being capable of preventing the X-rays from entering the gaps between the adjacent scintillators in the detector modules and preventing the X-rays from shifting to the adjacent pixels to produce crosstalk.

See, for example, US6304626 and CN103135121 disclosing the preamble of appended claim 1.

Accordingly, the present invention, as defined by the appended claims, is provided. The present invention can be understood better in light of the description of embodiments of the present invention with reference to the accompanying drawings, in which:
Fig. 1 illustrates a schematic diagram of an overall structure of a CT machine;
Fig. 2 illustrates a top view of scintillators for constituting two-dimensional discrete pixels in a detector module;
Fig. 3 illustrates a schematic diagram of an overall structure of a CT detector;
Fig. 4 illustrates a sectional view of the positions of two-dimensional grids provided in a CT detector;
Fig. 5 illustrates a top view of the positions of two-dimensional grids provided in a CT detector;
Fig. 6 illustrates a top view of one embodiment of the grid shapes in a CT detector according to the present invention; and
Fig. 7 illustrates a top view of another embodiment of the grid shapes in a CT detector according to the present invention.

Hereafter, a detailed description will be given for preferred embodiments of the present invention. It should be pointed out that in the detailed description of the embodiments, for simplicity and conciseness, it is impossible for the description to describe all the features of the practical embodiments in details. It should be understood that in the process of a practical implementation of any embodiment, just as in the process of an engineering project or a designing project, in order to achieve a specific goal of the developer and in order to satisfy some system-related or business-related constraints, a variety of decisions will usually be made, which will also be varied from one embodiment to another. In addition, it can also be understood that although the effort made in such developing process may be complex and time-consuming, some variations such as design, manufacture and production on the basis of the technical contents disclosed in the disclosure are just customary technical means in the art for those of ordinary skilled in the art relating to the contents disclosed in the present invention, which should not be regarded as insufficient disclosure of the present invention.

Unless defined otherwise, all the technical or scientific terms used in the claims and the description should have the same meanings as commonly understood by one of ordinary skilled in the art to which the present invention belongs. The terms "first", "second" and the like in the description and the claims of the present application for invention do not mean any sequential order, number or importance, but are only used for distinguishing different components. The terms "a", "an" and the like do not denote a limitation of quantity, but denote the existence of at least one. The terms "comprises", "comprising", "includes", "including" and the like mean that the element or object in front of the "comprises", "comprising", "includes" and "including" encompasses the elements or objects and their equivalents illustrated following the "comprises", "comprising", "includes" and "including", but do not exclude other elements or objects. The term "coupled", "connected" or the like is not limited to being connected physically or mechanically, nor limited to being connected directly or indirectly.

In order to make the purpose, the technical solutions and the advantages of the invention more apparent, the technical solutions of the present invention will be set forth clearly and fully hereinafter in combination with specific embodiments of the invention and the corresponding accompanying drawings. Obviously, the described embodiments are merely part-not all-of the embodiments in the present invention. In view of the embodiments in the present invention, other embodiments made by one of ordinary skilled in the art without inventive work all fall within the scope of protection of the invention.

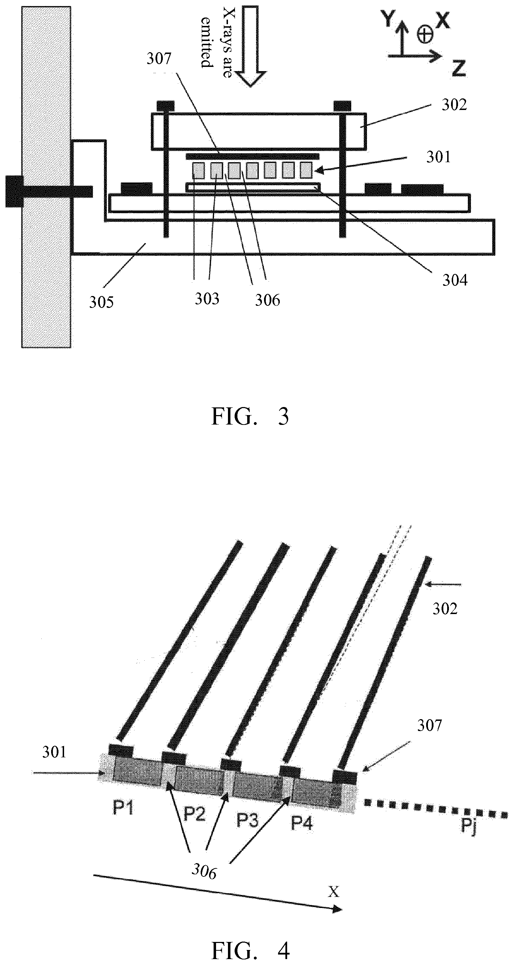

A CT detector usually includes multiple detector modules and multiple collimator plate. Fig. 3 illustrates one detector module 301 and the corresponding collimator plate 302 in the CT detector. The detector module 301 includes multiple scintillators 303 having gaps therebetween and for constituting two-dimensional discrete pixels, a photoelectric receiving diode 304, and a module pedestal 305. The scintillators may be arranged in the X direction and in the Z direction (along a vertical direction of a human body) to constitute a two-dimensional pixel array. The photoelectric receiving diode 304 may be mounted on the module pedestal 305, and the scintillators 303 may be mounted on the photoelectric receiving diode 304. The collimator plate 302 is located above one side of the detector module 301 receiving X-rays, for guiding the X-rays to the corresponding two-dimensional discrete pixels. The upper edge of the collimator plate 302 may be focused on a focus of a bulb tube of the X-rays, and the thickness of the collimator plate 302 is in the X direction.

No matter for an arc detector or for a detector of a polyline-segment type, there are certain gaps 306 between the multiple scintillators 303 within the detector module 301. Therefore, in an example which is not part of the invention, as shown in Fig. 3 in conjunction with Fig. 4, grids 307 may also be provided between the detector module 301 and the collimator plate 302, used to block the X-rays emitted to the gaps 306. In an example which is not part of the invention, the grids 307 may also be mounted on or above the scintillators 303. In an example which is not part of the invention, the lower edge of the collimator plate 302 may be positioned on the grids 307 or located above the grids 307.

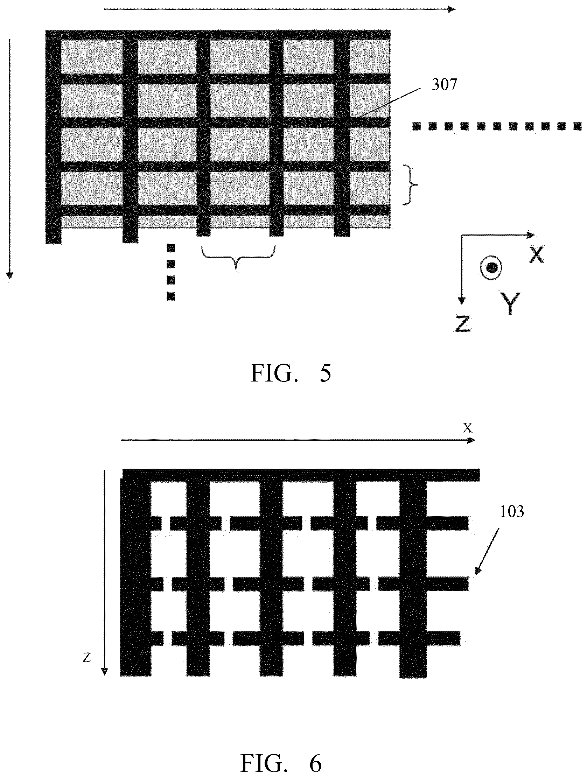

In an example which is not part of the invention, with reference to Fig. 5, the grids 307 may be provided on the gaps in two intersecting directions. In conjunction with Fig. 6, the grids 307 are provided on the gaps in the X direction and in the Z direction, and have a breaking joint on at least one gridline that is along the X direction. Similarly, there may also be a breaking joint on at least one gridline that is along the Z direction, or there may be breaking joints on at least one gridline that are along both the X direction and the Z direction. It should be emphasized that the positions of the breaking joints on different gridlines may be aligned, or may be not aligned. Although the breaking joints on the multiple gridlines that are along the X direction as shown in Fig. 6 are aligned in the Z direction, the positions of these breaking joints may also be not aligned in the Z direction.

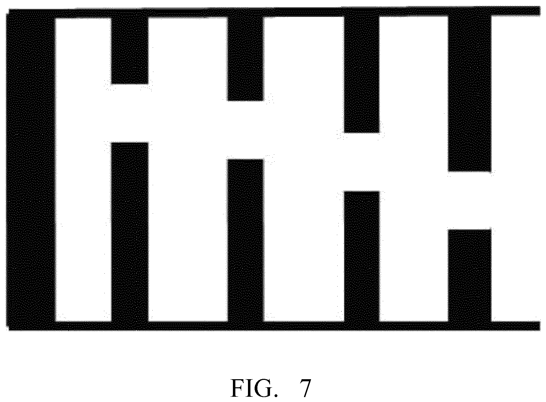

In another embodiment of the present invention, the grids 307 are provided on the gaps in only one direction. With reference to Fig. 7, the grids 307 are provided on the gaps only in the X direction, and have breaking joints on at least one gridline that is along the X direction.

In one embodiment of the present invention, the grids may have a thickness between 80 micrometers and 10 millimeters.

In one embodiment of the present invention, the gridlines in the grids themselves may have a width between 10 micrometers and 700 micrometers.

In one embodiment of the present invention, two adjacent gridlines in the grids have a pitch between 0.08 millimeters and 3 millimeters.

In one embodiment of the present invention, the grids may be made of a composite material containing tungsten or a high density alloy, or for strongly absorbing the X-rays.

In one embodiment of the present invention, the gridlines may be provided on the gaps not only asymmetrically but also symmetrically. No matter the gridlines are symmetrically or asymmetrically provided, i.e. a criterion can both be satisfied that the gaps are ensured to be covered by the gridlines so as not to be irradiated by the X-rays. Moreover, when it is required to use the gridlines to eliminate crosstalk of the X-rays on the adjacent pixels, the gridlines may also cover areas on the adjacent pixels that may receive the crosstalk of the X-rays.

So far a CT detector according to embodiments of the present invention has been described. According to the CT detector of the present invention, the X-rays can be prevented from entering the gaps between the adjacent pixels in the detector module, and the X-rays can be prevented from shifting to the adjacent pixels to produce crosstalk. In addition, the grids having the breaking joint are beneficial for the manufacture of the grids such that during the cutting process of the grids, a processing apparatus is capable of, after cutting out one blank, continuously moving into a next blank adjacent to the blank to process the next blank.

Embodiments of the present invention have been described above, and are not used to limit the present invention. For those skilled in the art, various alterations and changes may be made to the present invention.

## Claims

1. A CT detector (103), comprising:
a detector module (301) that includes a plurality of scintillators (303) having gaps (306) therebetween and for constituting two-dimensional discrete pixels;
a collimator plate (302) located above one side of said detector module (301) receiving X-rays, for guiding said X-rays to the corresponding two-dimensional discrete pixels;
wherein the CT detector (103) further comprises:
grids (307) located between said detector (301) module and said collimator plate (302), for blocking said X-rays emitted to said gaps (306); **characterized in that**:
a) said grids (307) are provided on said gaps (306) in two intersecting directions, and have a breaking joint in at least one of said directions; or
b) said grids (304) are provided on said gaps (306) in one direction and have a breaking joint in said direction.

2. The CT detector (103) according to claim 1, wherein said grids (307) have a thickness between 80 micrometers and 10 millimeters.

3. The CT detector (103) according to any preceding claim, wherein gridlines in said grids (307) have a width between 10 micrometers and 700 micrometers.

4. The CT detector (103) according to any preceding claim, wherein two adjacent gridlines in said grids (307) have a pitch between 0.08 millimeters and 3 millimeters.

5. The CT detector (103) according to any preceding claim, wherein said grids (307) are made of a composite material containing tungsten or a high density alloy, or for strongly absorbing said X-rays.

6. The CT detector (103) according to any preceding claim, wherein said grids (307) are asymmetrically provided on said gaps (306).

7. The CT detector (103) according to of claims 1 to 5, wherein said grids (307) are symmetrically provided on said gaps (306).

8. The CT detector (103) according to any preceding claim, wherein said CT detector (103) includes a plurality of detector modules (301) being configured to be polyline-shaped.

## Patentansprüche

1. CT-Detektor (103), umfassend:
ein Detektormodul (301), das mehrere Szintillatoren (303) aufweist, die Lücken (306) dazwischen aufweisen und zweidimensionale diskrete Pixel bilden;
eine Kollimatorplatte (302), die über einer Seite des Detektormoduls (301) angeordnet ist, die Röntgenstrahlen empfängt, um die Röntgenstrahlen zu den entsprechenden zweidimensionalen diskreten Pixeln zu führen;
wobei der CT-Detektor (103) ferner umfasst:
Gitter (307), die zwischen dem Detektormodul (301) und der Kollimatorplatte (302) angeordnet sind, um die Röntgenstrahlen zu blockieren, die zu den Lücken (306) emittiert werden; **dadurch gekennzeichnet, dass**:
a) die Gitter (307) an den Lücken (306) in zwei sich schneidenden Richtungen bereitgestellt sind und eine Bruchverbindung in mindestens einer der Richtungen aufweisen; oder
b) die Gitter (304) an den Lücken (306) in einer Richtung bereitgestellt sind und eine Bruchverbindung in dieser Richtung aufweisen.

2. CT-Detektor (103) nach Anspruch 1, wobei die Gitter (307) eine Dicke zwischen 80 Mikrometer und 10 Millimeter aufweisen.

3. CT-Detektor (103) nach einem der vorstehenden Ansprüche, wobei die Gitterzeilen in den Gittern (307) eine Breite zwischen 10 Mikrometer und 700 Mikrometer aufweisen.

4. CT-Detektor (103) nach einem der vorstehenden Ansprüche, wobei zwei benachbarte Gitterzeilen in den Gittern (307) eine Spitze zwischen 0,08 Millimeter und 3 Millimeter aufweisen.

5. CT-Detektor (103) nach einem der vorstehenden Ansprüche, wobei die Gitter (307) aus einem Verbundmaterial, das Wolfram oder eine hochdichte Legierung enthält, oder zum starken Absorbieren der Röntgenstrahlen hergestellt sind.

6. CT-Detektor (103) nach einem der vorstehenden Ansprüche, wobei die Gitter (307) asymmetrisch an den Lücken (306) bereitgestellt sind.

7. CT-Detektor (103) nach einem der Ansprüche 1 bis 5, wobei die Gitter (307) symmetrisch an den Lücken (306) bereitgestellt sind.

8. CT-Detektor (103) nach einem der vorstehenden Ansprüche, wobei der CT-Detektor (103) mehrere Detektormodule (301) aufweist, die polylinienförmig konfiguriert sind.

## Revendications

1. Détecteur CT (103), comprenant :
un module de détecteur (301) qui comprend une pluralité de scintillateurs (303) ayant des espaces (306) entre eux et pour constituer des pixels discrets bidimensionnels ;
une plaque de collimateur (302) située au-dessus d'un côté dudit module de détecteur (301) recevant des rayons X, pour guider lesdits rayons X vers les pixels discrets bidimensionnels correspondants ;
dans lequel le détecteur CT (103) comprend en outre :
des grilles (307) situées entre ledit module de détecteur (301) et ladite plaque de collimateur (302), pour bloquer lesdits rayons X émis vers lesdits espaces (306) ; **caractérisé en ce que** :
a) lesdites grilles (307) sont fournies sur lesdits espaces (306) dans deux directions se croisant, et présentent un joint de rupture dans au moins une desdites directions ; ou
b) lesdites grilles (304) sont fournies sur lesdits espaces (306) dans une direction et présentent un joint de rupture dans ladite direction.

2. Détecteur CT (103) selon la revendication 1, dans lequel lesdites grilles (307) présentent une épaisseur située entre 80 micromètres et 10 millimètres.

3. Détecteur CT (103) selon une quelconque revendication précédente, dans lequel des quadrillages dans lesdites grilles (307) présentent une largeur située entre 10 micromètres et 700 micromètres.

4. Détecteur CT (103) selon une quelconque revendication précédente, dans lequel deux quadrillages adjacents dans lesdites grilles (307) présentent un pas situé entre 0,08 millimètre et 3 millimètres.

5. Détecteur CT (103) selon une quelconque revendication précédente, dans lequel lesdites grilles (307) sont faites d'un matériau composite contenant du tungstène ou d'un alliage à haute densité, ou pour absorber fortement lesdits rayons X.

6. Détecteur CT (103) selon une quelconque revendication précédente, dans lequel lesdites grilles (307) sont fournies de manière asymétrique sur lesdits espaces (306).

7. Détecteur CT (103) selon les revendications 1 à 5, dans lequel lesdites grilles (307) sont fournis de manière symétrique sur lesdits espaces (306).

8. Détecteur CT (103) selon une quelconque revendication précédente, dans lequel ledit détecteur CT (103) comprend une pluralité de modules de détecteur (301) configurés pour être en forme de polyligne.
